# EUROPEAN PATENT SPECIFICATION

(11) **EP 1 222 094 B1**
(45) Date of publication and mention of the grant of the patent: **26.11.2003**
(21) Application number: 00964513.6
(22) Date of filing: 05.10.2000
(51) Int. Cl.: B60R 19/12, B60R 21/34

(54) **A VEHICLE BUMPER ARRANGEMENT**
FAHRZEUG- STOSSFÄNGERANORDNUNG
DISPOSITIF AMORTISSEUR POUR VEHICULE

(30) Priority: 18.10.1999 GB 9924461
(43) Date of publication of application: 17.07.2002
(73) Proprietor: Ford Global Technologies, Inc., Dearborn, Michigan 48126 (US)
(72) Inventor: STAINES, Bradley, Benfleet, Essex SS7 4AD (GB); WYATT, Richard, Essex SS17 7DS (GB)
(74) Representative: Messulam, Alec Moses
(86) International application number: GB0003819
(87) International publication number: WO01028818

(56) References cited:
- EP-A- 1 036 715
- DE-A- 19 802 841
- DE-A- 19 911 832
- FR-A- 2 445 783
- FR-A- 2 759 655

## Description

This invention relates to a pedestrian protection device for a motor vehicle, in particular for use on the front part of a vehicle.

There are increasing demands for motor vehicle design to take account of pedestrian safety and, so far as possible, to design vehicles so that in an impact between a pedestrian and a vehicle, the pedestrian has a reasonable chance of avoiding serious injury or death.

In the case of a frontal impact between a moving vehicle and a pedestrian, all or part of the pedestrian's body may be struck by the front bumper of the vehicle. Depending on the precise conditions of the collision, such a vehicle speed and the extent to which the vehicle is braking, the lower part of the pedestrian's leg may be caught beneath the bumper during the collision. To reduce the likelihood of serious injury to a pedestrian in the event of a frontal collision, it is known from GB 2 069 940 A to provide a protector part beneath the front bumper that extends beyond the bumper in the forward direction. However, such a protector part may limit the aesthetic appeal of the vehicle. Modern styling requirements normally dictate that if the bumper has a lower part, such as a spoiler, then it should be situated rearward of the front of the bumper.

Another example of bumper arrangement according to the preamble of claim 1 is known from DE 198 02 841 A1.

It is an object of the present invention to provide a motor vehicle bumper arrangement that addresses these issues.

According to the invention, there is provided a motor vehicle bumper arrangement comprising an elongate main bumper extending horizontally across the front of the vehicle and an elongate auxiliary bumper extending across the front of the vehicle at a level below that of the main bumper, characterised in that the main bumper has: a centre portion that extends across a median portion of the front of the vehicule and that projects further forward than the auxiliary bumper; and end portions either side of the centre portion that are equal in forward projection to the auxiliary bumper.

Preferably, the end portions will be corner portions at the front corners of the vehicle.

Preferably, to help protect a pedestrian involved in a collision close to the corner of the vehicle, the vehicle bumper arrangement will extend around each of the front corners of the vehicle and onto the vehicle sides.

Since in the central portion of the bumper the auxiliary bumper does not extend as far forward as the main bumper, the auxiliary bumper can be designed with the same appearance as a front spoiler, thereby increasing the aesthetic appeal of the bumper arrangement.

Preferably, the main bumper will have a deformable region comprising a volume of foam material or other deformable material (referred to here as the main deformable material), so that in a pedestrian collision, the deformable region deforms and absorbs some of the energy of the collision. The deformable region will preferably further comprise an outer skin covering the deformable material, the outer skin being sufficiently weak to deform or break in the event of a pedestrian collision.

To reduce the likelihood of serious injury to a pedestrian in a collision, the point where the bumper arrangement takes the impact of the collision with the pedestrian's upper or middle leg should be rearward of the point where the bumper arrangement takes the impact with the pedestrian's lower leg.

Therefore, the deformable region will preferably be supported by a cross member extending across the width of the vehicle, the cross member being situated rearward of the auxiliary bumper. In one likely type of frontal pedestrian collision, the deformable region of the main bumper will collapse when it collides with the pedestrian's leg, so that the principal impact of the collision is borne by the cross member and the auxiliary bumper. Since the auxiliary bumper is situated forward of the cross member, the combination of forces exerted on the pedestrian's leg will reduce the risk of a pedestrian's leg being caught beneath the vehicle during the collision.

Thus despite the fact than in external appearance the main bumper extends beyond the auxiliary bumper in accordance with styling considerations, the main impact of a collision with the main bumper will actually occur at a point that is rearward of the auxiliary bumper.

The auxiliary bumper will preferably comprise an outer skin supported by a stiffening member extending across the width of the vehicle, foam material or other deformable material being provided between the outer skin and the stiffening member in the region of the front corners of the vehicle. This deformable material (referred to here as the auxiliary deformable material) will help compensate for the fact that the stiffening member is less deformable close to the corners where it is secured to the vehicle body.

Preferably, the compliance of the deformable material in the main bumper will vary along the width of the bumper, the deformable material being stiffer close to the corners than in the centre. In the centre, where the main bumper extends forward of the auxiliary bumper, the deformable material will be sufficiently weak so as to collapse in the event of a collision with a pedestrian. At the corners, the deformable material need not be so stiff since the auxiliary bumper is substantially equal in forward projection to the main bumper.

The invention will now be further described, by way of example, with reference to the following drawings in which:
Figure 1 shows a side view of the front part of a motor vehicle with a front bumper arrangement according to the invention;
Figure 2 shows a schematic plan view from above of the front bumper arrangement;
Figure 3 shows a schematic cross-sectional view through the line III-III in Figure 2; and,
Figure 4 shows a schematic cross-sectional view through the line IV-IV in Figure 2.

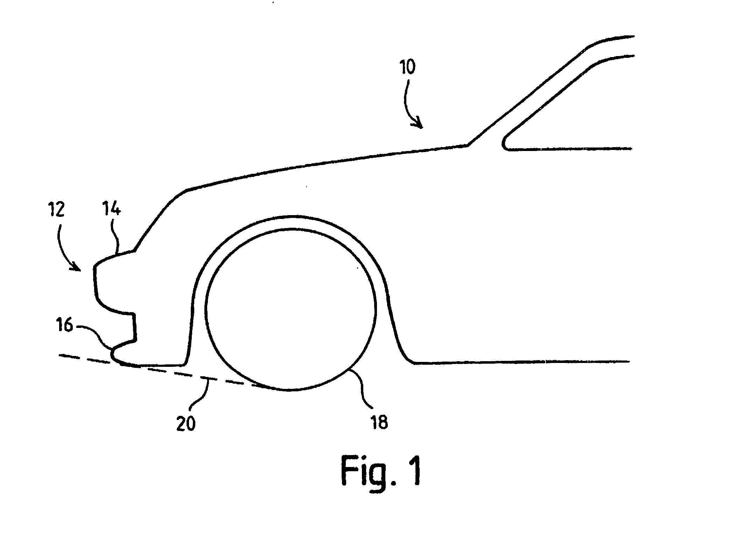

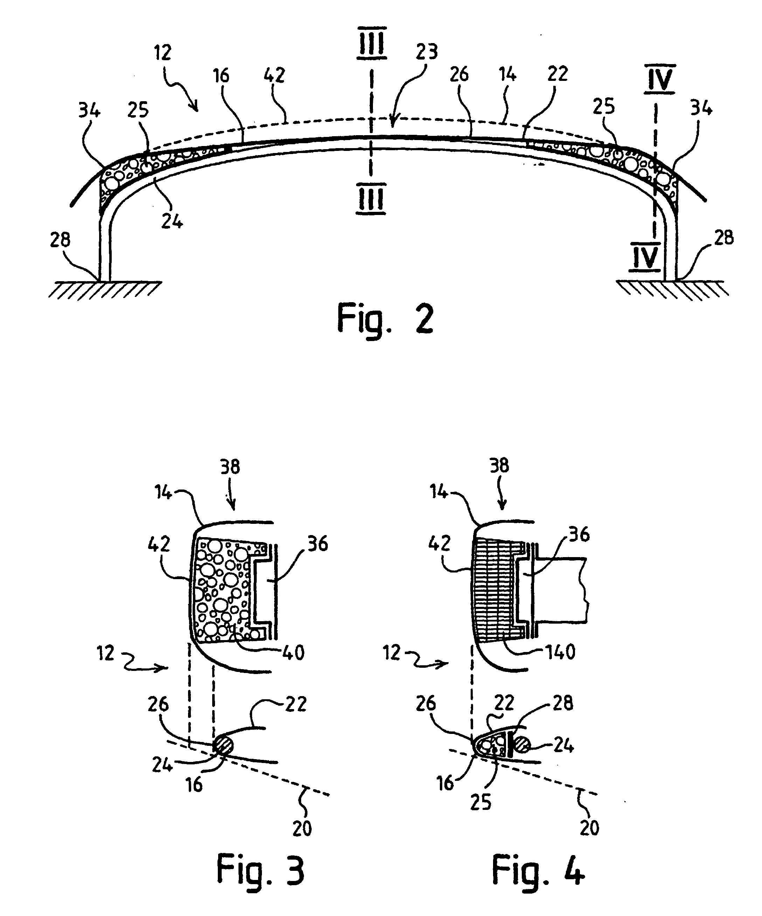

A front part of a vehicle 10 is shown in Figure 1 with a front bumper arrangement 12 comprising a main bumper 14 and a lower (auxiliary) bumper 16, both bumpers extending transversely across the front of the vehicle 10 and (as seen in Figure 2) around the front corners thereof. The lower bumper 16 extends across the vehicle at a lower level than the main bumper 14 in a similar fashion to a spoiler arrangement, of the type that is commonly placed on a vehicle to give it a sportier appearance and to reduce aerodynamic drag.

To reduce the likelihood that a pedestrian's leg will be swept beneath the vehicle is a frontal collision, the lower bumper 16 is positioned as low and as far forward as possible without extending beyond the approach angle line indicated by the dashed line 20 in Figure 1. The approach angle line 20 defines the minimum acceptable ground clearance, and is an imaginary line extending upwardly and forwardly from the tangency point, were the vehicle wheel 18 touches the approach angle line, the line being inclined an angle with the ground of between about 16 ° and 20 ° for most passenger road vehicles.

The bumper arrangement is shown schematically when viewed from above in Figure 2, and in cross section in Figures 3 and 4. The lower bumper 16 has a stiffening member 24 which extends across the width of the vehicle 10 and curves around each corner 34, extending a short distance along each side of the vehicle where it is secured 28. The stiffening member 24 has an outer skin 22 which surrounds the forward facing side of the stiffening member 24. In a central region 23, the skin 22 is adjacent to the stiffening member 24, but in the corner regions 34, the stiffening member curves rearwardly, leaving a separation between the skin 22 and the stiffening member 24. Foam padding 25 is provided this separation in the corner regions between the skin 22 and the stiffening member 24, to help compensate for the reduced compliance of the stiffening member in these regions, the reduced compliance being due to the proximity of the securing points 28 where the lower bumper 16 is secured to the vehicle 10.

The forward projection of the lower bumper 16 is substantially the same across the width of the vehicle, so that even close to the corners 34, the lower bumper extends substantially up to the approach angle line 20 shown in Figure 1. This results in a forward-facing edge 26 of the lower bumper 16 being substantially straight as shown in Figure 2.

However, when viewed from above as shown in Figure 2, the forward edge 32 of the main bumper 14 (indicated by the dashed line) has a gentle curve, so that whilst it is substantially aligned with the lower bumper 16 in the corner regions 34 of the bumper, it extends forward beyond the lower bumper 16 in the central region 23 of the bumper arrangement 12.

The main bumper 14 has a cross member 36 which supports a deformable region 38 situated forward of the cross member. The deformable region 38 comprises a region of foam 40 within a skin 42 that is U-shaped in vertical cross section, the skin 42 and the foam 40 being sufficiently weak to collapse under the force of a collision with a pedestrian. The cross member 36 is stronger than the deformable region 38, and will bear the force on the main bumper 14 in the event of a collision.

(The skin 42 of the main bumper 14 and the skin 22 of the lower bumper 16 may be moulded as a single part).

As can best be seen from Figure 3, in the central region 23 of the bumper arrangement 12, the cross member 36 of the main bumper 14 is rearward of the lower bumper 16, and in particular the stiffening member 24 of the lower bumper 16. Hence in a pedestrian collision where the pedestrians leg collides with the central region 23 of the bumper arrangement, the main forces on the pedestrian's leg will be imparted by the cross member 36 and the stiffening member 24. Because the stiffening member 24 is forward of the cross member 36, the pedestrian's leg will be less likely to become caught beneath the main bumper 14 or the vehicle 10.

Close to the corners 34 of the vehicle 10, the edges 26,42 of the main and lower bumpers 14,16 are substantially vertically aligned (as are the cross member 36 and the stiffening member 24). Since in the corner regions 34 the main bumper 14 does not extend forward of the lower bumper 16, foam 40 in the main bumper need not be so compliant in the corner 34 regions as it is in the central region 23, and hence stiffer foam 140 is used in the corner regions of the main bumper 14 in order to improve the energy absorption of the main bumper.

When viewed from above as shown in Figure 2, the forward edge 42 of the main bumper 14 (indicated by the dashed line) has a gentle curve, so that whilst it is substantially aligned with the lower bumper 16 in the corner regions 34 of the bumper, it extends beyond the lower bumper 16 in the central region 23 of the bumper arrangement 12.

Thus in the present invention the main bumper 14 can conform with the styling requirement that it should extend beyond the lower bumper 16, and the pedestrian safety problems associated with such styling requirements are alleviated.

## Claims

1. A motor vehicle bumper arrangement (12) comprising an elongate main bumper (14) extending horizontally across the front of the vehicle (10) and an elongate auxiliary bumper (16) extending across the front of the vehicle (10) at a level below that of the main bumper (14), wherein the main bumper (14) has: a centre portion (23) that extends across a median portion of the front of the vehicle (10) and that projects further forward than the auxiliary bumper (16); and end portions (34) on either side of the centre portion (23) **characterised in that** said end portions are equal in forward projection to the auxiliary bumper (16).

2. A vehicle bumper arrangement (12) as claimed in Claim 1 wherein the main bumper (14) has a deformable region (38) comprising a volume of deformable material (40).

3. A vehicle bumper arrangement (12) as claimed in Claim 2 wherein the deformable region (38) is supported by a cross member (36) extending across the width of the vehicle (10), the cross member (36) being situated rearward of the auxiliary bumper (16).

4. A vehicle bumper arrangement (12) as claimed in any preceding claim, wherein the auxiliary bumper (16) comprises a stiffening member (24) extending across the length of the auxiliary member (16).

5. A vehicle bumper arrangement (12) as claimed Claim 4, wherein the auxiliary bumper (16) comprise an outer skin (22) supported by the stiffening member (24).

6. A vehicle bumper arrangement (12) as claimed in Claims 4 or 5 when dependent on Claim 3, wherein the cross member (36) of the main bumper (14) is situated rearward of the stiffening member (24) in the auxiliary bumper.

7. A vehicle bumper arrangement (12) as claimed in Claim 5, or Claim 6 when dependent on Claim 5, wherein deformable material (25) is provided between the outer skin (22) and the stiffening member (24) in the region of the front corners of the vehicle (10).

8. A vehicle bumper arrangement (12) as claimed in any previous claim, wherein the vehicle bumper arrangement (12) extends around each of the front corners of the vehicle (10) and onto the vehicle sides.

9. A vehicle bumper arrangement (12) as claimed in Claims 2 or 3, wherein the compliance of the deformable material in the main bumper (40) is stiffer close to the corners than in the centre (23).

## Patentansprüche

1. Stoßfängeranordnung (12) für ein Kraftfahrzeug, mit einer horizontal quer über die Front des Fahrzeuges (10) reichenden länglichen Hauptstoßstange (14) und einem in einer Höhenlage unter derjenigen der Hauptstoßstange (14) quer über die Front des Fahrzeuges (10) reichenden länglichen Zusatzstoßfänger (16),
worin die Hauptstoßstange (14) folgendes aufweist:
einen mittleren Abschnitt (23), der sich über einen mittleren Bugabschnitt des Fahrzeuges (10) erstreckt und weiter nach vorne vorsteht als der Zusatzstoßfänger (16); und
Endabschnitte (34) zu beiden Seiten des mittleren Abschnittes (23);
**dadurch gekennzeichnet, daß** besagte Endabschnitte in ihrem Überstand nach vorne gleich dem Zusatzstoßfänger (16) sind.

2. Fahrzeug-Stoßfängeranordnung (12) nach Anspruch 1, worin die Hauptstoßstange (14) einen verformbaren Bereich (38) hat, der ein Volumen von verformbarem Material (40) enthält.

3. Fahrzeug-Stoßfängeranordnung (12) nach Anspruch 2, wo der verformbare Bereich (38) von einem Querteil (36) getragen wird, das sich über die ganze Breite des Fahrzeuges (10) erstreckt, wobei das Querteil (36) dem Zusatzstoßfänger (16) gegenüber nach hinten versetzt ist.

4. Fahrzeug-Stoßfängeranordnung (12) nach einem beliebigen der vorangehenden Ansprüche, worin der Zusatzstoßfänger (16) ein Versteifungsteil (24) enthält, das sich über die ganze Länge des Zusatzstoßfängers (16) erstreckt.

5. Fahrzeug-Stoßfängeranordnung (12) nach Anspruch 4, worin der Zusatzstoßfänger (16) eine von dem Versteifungsteil (24) getragene Außenhaut (22) aufweist.

6. Fahrzeug-Stoßfängeranordnung (12) nach Anspruch 4 oder 5, wenn abhängig von Anspruch 3, worin das Querteil (36) der Hauptstoßstange (14) dem Versteifungsteil (24) im Zusatzstoßfänger gegenüber nach hinten versetzt angeordnet ist.

7. Fahrzeug-Stoßfängeranordnung (12) nach Anspruch 5, oder nach Anspruch 6 wenn abhängig von Anspruch 5, worin ein verformbares Material zwischen der Außenhaut (22) und dem Versteifungsteil (24) vorgesehen ist, im Bereich der vorderen Ecken des Fahrzeugs (10).

8. Fahrzeug-Stoßfängeranordnung (12), nach einem beliebigen der vorangehenden Ansprüche, worin die Fahrzeug-Stoßfängeranordnung (12) sich um jede der vorderen Ecken des Fahrzeugs (10) und auf die Seiten des Fahrzeugs erstreckt.

9. Fahrzeug-Stoßfängeranordnung (12) nach Anspruch 2 oder 3, worin die Nachgiebigheit des verformbaren Materials in der Hauptstoßstange (14) steifer in der Nähe der Ecken als im mittleren Abschnitt (23) ist.

## Revendications

1. Agencement de pare-chocs de véhicule à moteur (12) comprenant un pare-chocs principal allongé (14) s'étendant horizontalement sur tout l'avant du véhicule (10) et un pare-chocs auxiliaire allongé (16) s'étendant sur tout l'avant du véhicule (10) à un niveau en dessous de celui du pare-chocs principal (14), dans lequel le pare-chocs principal (14) comporte : une partie centrale (23) qui s'étend en travers d'une partie médiane de l'avant du véhicule (10) et qui dépasse en outre vers l'avant par rapport au pare-chocs auxiliaire (16), et des parties d'extrémité (34) de part et d'autre de la partie centrale (23), **caractérisé. en ce que** lesdites parties d'extrémité sont identiques dans leur dépassement vers l'avant au pare-chocs auxiliaire (16).

2. Agencement de pare-chocs de véhicule (12) selon la revendication 1, dans lequel le pare-chocs principal (14) comporte une région déformable (38) comprenant un volume de matériau déformable (40).

3. Agencement de pare-chocs de véhicule (12) selon la revendication 2, dans lequel la région déformable (38) est supportée par un élément transversal (36) s'étendant sur la largeur du véhicule (10), l'élément transversal (36) étant situé en arrière du pare-chocs auxiliaire (16).

4. Agencement de pare-chocs de véhicule (12) selon l'une quelconque des revendications précédentes, dans lequel le pare-chocs auxiliaire (16) comprend un élément de renforcement (24) s'étendant sur la longueur de l'élément auxiliaire (16).

5. Agencement de pare-chocs de véhicule (12) selon la revendication 4, dans lequel le pare-chocs auxiliaire (16) comprend une enveloppe extérieure (22) supportée par l'élément de renforcement (24).

6. Agencement de pare-chocs de véhicule (12) selon les revendications 4 ou 5 lorsqu'elles dépendent de la revendication 3, dans lequel l'élément transversal (36) du pare-chocs principal (14) est situé en arrière de l'élément de renforcement (24) dans le pare-chocs auxiliaire.

7. Agencement de pare-chocs de véhicule (12) selon la revendication 5, ou selon la revendication 6 lorsque celle-ci dépend de la revendication 5, dans lequel un matériau déformable (25) est disposé entre l'enveloppe extérieure (22) et l'élément de renforcement (24) dans la région des ailes avant du véhicule (10).

8. Agencement de pare-chocs de véhicule (12) selon l'une quelconque des revendications précédentes, dans lequel l'agencement de pare-chocs de véhicule (12) s'étend autour de chacune des ailes avant du véhicule (10) et sur les côtés du véhicule.

9. Agencement de pare-chocs de véhicule (12) selon la revendication 2 ou 3, dans lequel l'élasticité du matériau déformable dans le pare-chocs principal (14) est plus raide près des ailes qu'au centre (23).
